# EUROPEAN PATENT APPLICATION

(11) **EP 3 489 803 A1**
(43) Date of publication of application: **29.05.2019**
(21) Application number: 18207203.3
(22) Date of filing: 20.11.2018
(51) Int. Cl.: G06F 3/01

(54) **SYSTEMS AND METHODS FOR PROVIDING HAPTIC FEEDBACK ACCORDING TO TILT-BASED INPUTS**

(30) Priority: 27.11.2017 US 201715822794
(71) Applicant: Immersion Corporation, San Jose, CA 95134 (US)
(72) Inventor: HEUBEL, Robert, San Leandro, CA California 94577 (US)
(74) Representative: Hofstetter, Schurack & Partner

(57) **Abstract**

Devices, systems, and methods for providing haptic effects as feedback in response to tilt-based inputs are provided. Tilt-based inputs may be detected by a tilt-input sensor which may transmit tilt-input signals to a processor. The processor may determine characteristics of the tilt-based input and, in response to the determined characteristics of the tilt-based input, the processor may determine haptic effect characteristics. According to the haptic effect characteristics, the processor may select and actuate a haptic actuator to output the haptic effect as feedback according to the tilt-based input.

## Description

### FIELD OF THE INVENTION

The present invention relates to systems and methods for providing haptic feedback according to tilt-based inputs.

### BACKGROUND OF THE INVENTION

Video games and virtual reality systems have become ever more popular due to the marketing toward, and resulting participation from, casual gamers. In a typical implementation, a computer system displays a visual or graphical environment to a user on a display device. Users can interact with the displayed environment by inputting commands or data from a controller or peripheral device. The computer updates the environment in response to the user's manipulation of a moved manipulandum, such as a joystick handle, and provides visual feedback to the user using the display device.

Conventional video game devices or controllers use visual and auditory cues to provide feedback to a user. In some controllers or peripheral devices, kinesthetic feedback (such as active and resistive haptic feedback) and/or tactile feedback (such as vibration, texture, and heat) is also provided to the user, more generally known collectively as "haptic feedback" or "haptic effects." Haptic feedback can provide cues that enhance and simplify use of the controller or peripheral device. For example, vibration effects, or vibrotactile haptic effects, may be useful in providing cues to users of electronic devices to alert the user to specific events, or provide realistic feedback to create greater sensory immersion within a simulated or virtual environment. Conventional haptic feedback systems for gaming and other devices generally include an actuator for generating the haptic feedback, which may be attached to a housing of the controller/peripheral device. More particularly, motors or other actuators of the controller or peripheral device may be housed therein and connected to a controlling computer system. The computer system receives sensor signals from the controller or peripheral device and sends appropriate haptic feedback control signals to the actuators. The actuators then provide haptic feedback to the controller. The computer system can thus convey physical sensations to the user in conjunction with other visual and auditory feedback.

Many systems use tilt-based controls. Tilt-based controls can be of particular value for several reasons. They permit a user's fingers to be free to perform other system mechanics. Thus, tilt-based controls can widen the array of input options that are immediately available to a user. Further, tilt-based controls permit input across a broad span of magnitudes, allowing a user to precisely control the magnitude of a tilt-based input. Tilt-based controls also permit a user to maintain a level of tilt-based input while using other input devices (triggers, buttons, joysticks). Tilt-based controls are frequently used in virtual reality systems, particularly for avatar movement control. Tilt-based controls are also frequently used for other interactive mechanics that benefit from a variable input.

Conventional haptic effects, designed for conventional inputs such as triggers and buttons, may not always be suitable for use with tilt-based controls. Systems and methods discussed herein provide haptic effects tailored to be provided with tilt-based controls and in environments in which tilt-based controls are used.

### BRIEF SUMMARY OF THE INVENTION

In an embodiment, a system for determining haptic feedback in response to a tilt-based input is provided. The system comprises a haptic actuator, at least one user input device configured to receive a tilt-based input and output a tilt-input signal, and at least one processor configured to execute computer instructions. The at least one processor is configured to execute the computer instructions to receive the tilt-input signal from the at least one user input device, determine a characteristic of a haptic effect based on the tilt-input signal, generate a haptic output command configured to cause the haptic effect, and provide the haptic output command to the haptic actuator whereby the haptic actuator is actuated to cause the haptic effect as haptic feedback in response to the tilt-based input.

In another embodiment, a method for determining haptic feedback in response to a tilt-based input is provided. The method is to be carried out by at least one processor executing computer instructions and comprises receiving, by the at least one processor, a tilt-input signal from at least one user input device, determining, by the at least one processor, a characteristic of a haptic effect based on the tilt-based input, generating, by the at least one processor, a haptic output command configured to cause the haptic effect, and providing, by the at least one processor, the haptic output command to a haptic actuator whereby the haptic actuator is actuated to cause the haptic effect as haptic feedback in response to the tilt-based input.

### BRIEF DESCRIPTION OF DRAWINGS

The foregoing and other features and advantages of the invention will be apparent from the following description of embodiments hereof as illustrated in the accompanying drawings. The accompanying drawings, which are incorporated herein and form a part of the specification, further serve to explain the principles of the invention and to enable a person skilled in the pertinent art to make and use the invention. The drawings are not to scale.
FIG. 1 is a block diagram of a system for providing haptic feedback to a haptic enabled device according to an embodiment hereof.
FIG. 2 is a schematic illustration of the system of FIG. 1, wherein the haptic enabled device is a tilt-based input device.
FIGS. 3A and 3B illustrates a haptic enabled device including haptic actuators and tilt-input sensors sharing a housing.
FIG. 4 illustrates a block diagram of the haptic enabled device of FIGS. 3A and 3B.
FIG. 5 illustrates a haptic enabled tilt-based input system including haptic actuators having a separate housing.
FIG. 6 illustrates a block diagram of the haptic enabled tilt-based input system of FIG. 5.
FIG. 7 is a flow chart illustrating a process of providing tilt-input haptic feedback.
FIGS. 8A and 8B illustrate examples of the process of FIG. 7.
FIG. 9 is a flow chart illustrating a process of providing contextual tilt-input haptic feedback.
FIGS. 10A and 10B illustrate examples of the process of FIG. 9.
FIGS. 11A and 11B illustrate a haptic enabled tilt-based input system including a tilt-based input device and multiple haptic enabled output devices.
FIG. 12 illustrates an exemplary embodiment of a haptic enabled tilt-based input system.
FIGS. 13A-13E illustrate the use of a haptic enabled tilt-based input system
FIG. 14 illustrates an exemplary embodiment of a haptic enabled tilt-based control device.
FIGS. 15A-15E illustrate the use of a haptic enabled tilt-based control device.

### DETAILED DESCRIPTION OF THE INVENTION

Specific embodiments of the present invention are now described with reference to the figures. The following detailed description is merely exemplary in nature and is not intended to limit the invention or the application and uses of the invention. Furthermore, there is no intention to be bound by any expressed or implied theory presented in the preceding technical field, background, brief summary or the following detailed description. Furthermore, although the following description is primarily directed to gaming devices and controllers for gaming devices, those skilled in the art would recognize that the description applies equally to other systems, including virtual reality systems, augmented reality systems, mixed-reality systems, and peripherals for these systems.

Embodiments of the present invention are directed to systems and methods for providing haptic effects responsive or as feedback to tilt-based inputs. Systems described herein incorporate one or more haptic enabled tilt-based input systems and one or more computer systems. Haptic enabled tilt-based input systems generate tilt-input information according to a tilt-based input detected by a tilt-based input device and provide appropriate haptic effects or responses as feedback. Haptic effects provided according to tilt-based inputs are configured with various characteristics, including magnitude, location, and haptic type, to reflect aspects of a tilt-based control input, such as the input itself, a system response to the input, and/or system context events associated with the input.

Tilt-based inputs, as described herein, include inputs from control devices, i.e., tilt-based input devices, that operate according to a tilt measurement. Tilt measurements include measurements that determine a degree of tilt around one or more tilt axes associated with the tilt-based input device. Tilt axes may be defined with respect to one or more reference planes, and may include, as conventionally known, at least a pitch axis, a roll axis, and a yaw axis.

For example, a simple tilt-based input device, shaped as a rod, may have a single tilt axis, i.e., a roll axis and an associated reference plane, the ground. The roll axis of the simple tilt-based input device extends perpendicular to the length of the tilt-based input device and parallel to the ground reference plane. If the rod is held longwise in front of a user, the roll axis extends from the user through the rod. Transducers in the tilt-based input device measure the rotation angle, or degree of tilt, of the device around the roll axis to detect a tilt-based input. From the tilt-based input the tilt-based input device provides tilt-input information to a system that the tilt-based input device is in communication with.

In another example, a more complex tilt-based input device, shaped as a tablet or disc, for example, may have two tilt axes defining a tilt plane. The two tilt axes may be a pitch axis and a roll axis, defined as two axes perpendicular to one another and parallel to a ground reference plane. Although pitch and roll axes are perpendicular to one another, a two-axis tilt-based input device does not require that the axes be perpendicular. The degree of tilt around both tilt axes is measured via transducers to determine the output of the two-axis tilt-based input device.

In some implementations, a three-axis device may include a pitch axis, a roll axis, and a yaw axis. The yaw axis may be perpendicular to the roll and pitch axes, and perpendicular to the ground reference plane.

In some implementations, tilt-based input devices may use alternative reference planes. Reference planes may include imaginary planes against which a tilt axis can be measured, and may include the sky, desk or table tops, planes associated with a base or other portion of the tilt-based input device, and any other plane that a tilt axis can be measured with respect to. For example, a three-axis tilt-based input device may include a pitch axis, a roll axis, and a yaw axis. These axes may be defined with reference to a base of the tilt-based input device. Thus, if the tilt-based input device is placed on an angled table, the reference plane may be the angled surface of the table.

In some implementations, a tilt-based input device may include multiple devices. A pair of wands, for example, may operate as a tilt-based input device. In such a device, the tilt axes may be defined as pitch, roll, and yaw axes with respect to a ground reference plane. An imaginary line drawn between corresponding portions of the wands (e.g., the tips) may be used to determine a tilt measurement around a given axis. For example, holding the wand tips at the same height with respect to the ground, but moving one forward creates tilt around a yaw axis. Raising or lowering one of the wand tips when they are held with zero yaw creates tilt around the roll axis. Raising or lowering of the wand tips when they are held with some degree of yaw creates tilt around the roll axis and the pitch axis.

In various implementations, tilt measurement devices, i.e., tilt-input sensors, may be included in tilt-based input devices, and may provide tilt measurements. Tilt measurement devices may include accelerometers, antennas, RFID chips, cameras, and other suitable devices.

Embodiments are described herein with reference to pitch, roll, and yaw axes for convenience sake. Embodiments consistent with the scope of the invention are not limited to the use of these or any specific axes. Further embodiments consistent with the scope of the invention are not limited to the use of any specific reference plane. For the purposes of the present disclosure, a tilt axis may be established with respect to any suitable reference plane.

Embodiments described herein relate to devices and systems that include a computer system and one or more haptic enabled devices.

A computer system consistent with the present invention may be configured as a server (e.g., having one or more server blades, processors, etc.), a gaming console, a handheld gaming device, a personal computer (e.g., a desktop computer, a laptop computer, etc.), a smartphone, a tablet computing device, and/or other device that can be programmed to provide a haptic output command. In some implementations, computer systems consistent with the present invention may include cloud based computer platforms. The computer system may include one or more processors (also interchangeably referred to herein as processors, processor(s), or processor for convenience), one or more storage devices, a haptic communication unit or units, and/or other components. Computer system processors may be programmed by one or more computer program instructions to carry out methods described herein. As used herein, for convenience, the various instructions may be described as performing an operation, when, in fact, the various instructions program the processors (and therefore the computer system) to perform the operation.

Haptic communication units consistent with the present invention include any connection device, wired or wireless, that may transmit or communicate a haptic output command. For example, a haptic communication unit may include a wireless device, such as a BLUETOOTH® antenna, configured to communicate with a haptic enabled device to deliver a haptic output command for causing a haptic effect to be performed by the haptic enabled device. A haptic communication unit may further include a wired port for communicating a haptic output command. In some implementations, a haptic communication unit may be a dedicated unit configured solely for delivering a haptic output command. In some implementations, a haptic communication unit may further function to deliver a myriad of other communications, wired or wirelessly, to an external device.

Haptic enabled devices include devices having one or more haptic actuators for delivering a haptic effect to a user. In some implementations, haptic enabled devices may be devices that include one or more haptic actuators that directly receive haptic output commands, for example, from a computer system, for actuation. In some implementations, haptic enabled devices may further include one or more processors that may process or interpret a received haptic output signal or haptic output command before delivering an actuation signal to one or more haptic actuators.

In some implementations, haptic enabled devices may include user input elements, including control elements such as tilt-based input elements, triggers, buttons, joysticks, joypads, etc., to permit a user to interact with a computer system. Haptic enabled devices may include devices designed to function as accessory or peripheral units to a central device, such as a computer system consistent with the present invention. Haptic enabled devices may also, in some embodiments, further include all of the functionality of computer systems consistent with the present invention. Thus, a haptic enabled device may function as a computer system and may include haptic actuators, tilt-based input elements, and other control elements.

Haptic output commands may be used to directly or indirectly cause actuation of a haptic actuator. In some implementations, haptic output commands may include haptic output signals, transmitted via wires or wirelessly, to cause a haptic actuator to produce a haptic effect. Haptic output signals may include actuation signals received by a haptic actuator to cause the haptic effect. Haptic output signals may also include signals transmitted between other system components with information about a desired haptic effect. For example, a computer system processor may output a haptic output signal containing information about haptic effects to occur to a processor associated with a haptic enabled device. The haptic enabled device may receive the haptic output signal, process it, and output another haptic output signal to a haptic actuator to cause a haptic effect. Thus, a haptic output signal may include any signal to be used for generating a haptic effect. Haptic output commands may further include software commands. That is, a software interaction may generate a haptic output command including information for causing a haptic actuator actuation. A haptic output command in the form of a software command may cause the generation of a haptic output command in the form of a haptic output signal by a processor.

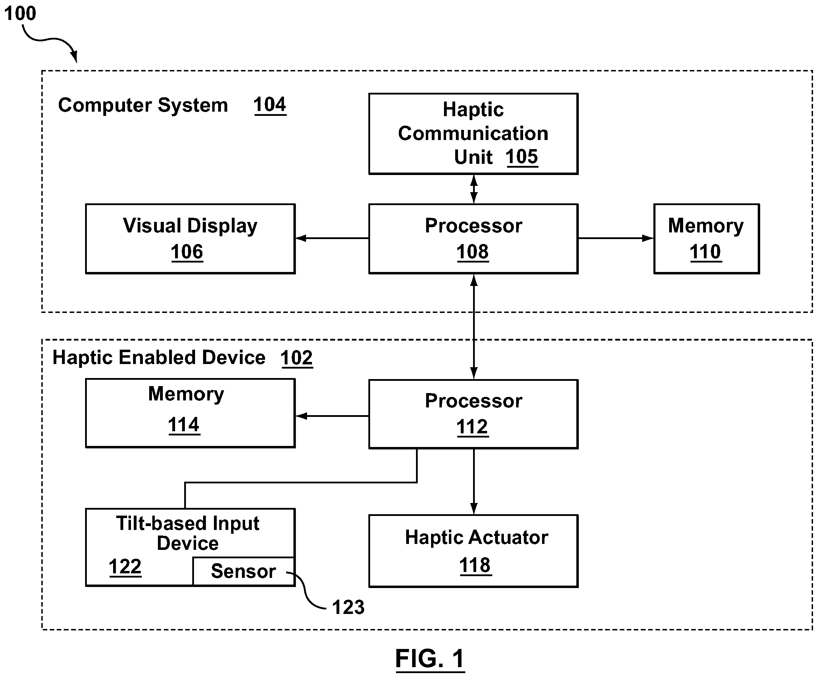

FIGS. 1-7 illustrate systems and devices consistent with embodiments hereof for determining haptic effects associated with tilt-based control inputs.

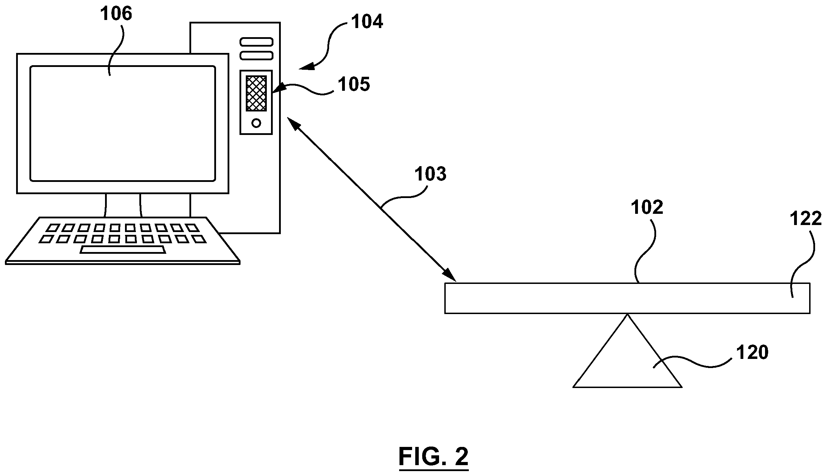

FIG. 1 is a block diagram of a system 100 for providing haptic feedback to a haptic enabled device 102 according to an embodiment hereof and FIG. 2 is a schematic illustration of the system of FIG. 1. In the embodiment of FIGS. 1 and 2, the haptic enabled device 102 includes a tilt-based input device 122. Those skilled in the art will recognize that the tilt-based input device 122 illustrated is merely an example embodiment of a tilt-based input device and that tilt-based input devices with other configurations, shapes, and sizes may be used. For example, the haptic enabled device 102 may be a gaming controller for use with the hands or feet having at least one tilt-based input device for a gaming system.

In some implementations, a haptic enabled device may be configured to function as a tilt-based input device. For example, a handheld tablet or mobile phone having at least one tilt-input sensor, or other controllers that may receive tilt-based inputs from a user such as, but not limited to, mobile phones, personal digital assistants (PDA), tablets, computers, headsets, gaming peripherals, and other controllers for virtual reality systems known to those skilled in the art.

With reference to the embodiment of FIGS. 1 and 2, the haptic enabled device 102 may be in communication, wired or wireless, with a computer system 104. As shown in FIG. 1, the computer system 104 includes at least one processor 108, a memory 110, and, optionally, a visual display 106. The computer system 104 may be configured to generate a virtual environment on the visual display 106. The visual display 106 may include, for example a screen and/or a headset.. The processor 108 of the computer system 104 executes software instructions stored in the memory 110. Processor 108 may include one or more of any type of general purpose processor, and may also be a processor specifically designed to provide haptic output commands. The processor 108 may be the same processor that operates the entire computer system 104, and/or may be a separate processor. Processor 108 executes computer instructions to determine haptic output commands to send to the haptic enabled device 102 and in what order to send the haptic output commands. The memory 110 may include one or more of any type of storage device or non-transitory computer-readable medium, such as but not limited to random access memory (RAM) or read-only memory (ROM). Memory 110 may also be located internal to the host processor, or any combination of internal and external memory.

The computer system 104 may be coupled to the visual display 106 via wired or wireless means. Visual display 106 may include any type of medium that provides graphical information to a user; including, but not limited to, monitors, television screens, plasmas, liquid crystal display (LCDs), projectors, or any other display devices. In an embodiment, computer system 104 may be a gaming device console and visual display 106 may be a monitor coupled to the gaming device console, as known in the art. In another embodiment, as known to those skilled in the art, computer system 104 and visual display 106 may be combined into a single device.

Computer system 104 also includes a haptic communication unit 105. The haptic communication unit 105 may include a wired or wireless communication unit. Haptic communication unit 105 is configured to transmit or otherwise convey haptic output commands to the haptic enabled device 102. In some implementations, haptic communication unit 105 may be dedicated to the provision of haptic output commands. In some implementations, haptic communication unit 105 may be configured for a wide variety of communications tasks including, but not limited to, the provision of haptic output commands. The additional communication tasks may include, for example, control inputs and outputs, outputs to additional accessory devices, and others.

As shown in FIGS. 1 and 2, computer system 104 is in communication with haptic enabled device 102 through a wired or wireless connection 103. Any wireless or wired communication method or protocol may be used for connection 103. These may include but are not limited to a serial connection, USB connection, HDMI® connection, WI-FI® connection, BLUETOOTH® connection and/or any other suitable connection. Further, computer system 104 may be in the cloud and thus may not be required to be wired or connected wirelessly in a local fashion.

As shown in FIG. 2, the haptic enabled device 102 includes a housing or base 120 and tilt-based input device 122 which may move in one or more degrees of freedom. Haptic enabled devices 102 including tilt-based input devices and/or other input receiving structures may further be referred to as control devices. Haptic enabled device 102 may further include any number of buttons, triggers, and other input devices (not shown). Tilt-based input device 122 extends from housing 120. Although FIG. 2 illustrates a seesaw-type tilt-based input device 122 of the haptic enabled device 102, it will be understood by one of ordinary skill in the art that embodiments in accordance herewith are not limited to a seesaw-type tilt-based input device, but also includes any devices moveable in, either in whole or in part, one or more degrees of freedom. Those skilled in the art will recognize that a seesaw-type structure is merely an example embodiment of a tilt-based input device of a controller or haptic enabled device, and that tilt-based input devices with other configurations such as wands, gamepads, tablets, headsets, and others may be used as will be described in more detail herein. In some implementations, as explained in greater detail below, user control devices including a tilt-based input device may be housed separately from a haptic enabled device 102, which may include no input receiving structures and may be configured only for haptic output.

With additional reference to FIG. 1, the haptic enabled device 102 may include a processor 112, a memory 114, one or more tilt input sensors 123, and at least one haptic actuator(s) 118. Haptic enabled device 102 may be alternatively configured to not include the processor 112, whereby all input/output signals from haptic enabled device 102 are handled and processed directly by computer system 104. The processor 112 is electrically coupled to the haptic actuator(s) 118 to provide haptic output commands thereto based on haptic output commands received from computer system 104. Similar to the host processor 108, the processor 112 may determine haptic output commands to send to the one or more haptic actuator(s) 118 to cause a haptic effect. In addition, if the haptic enabled device 102 includes more than one haptic actuator, the processor 112 determines which haptic actuator will receive the haptic output command. In addition, similar to the memory 110 of the computer system 104, the local memory 114 may be any type of storage device or computer-readable medium, such as but not limited to random access memory (RAM) or read-only memory (ROM). The local memory 114 may also be located internal to the local processor 112, or any combination of internal and external memory.

The tilt-based input device 122 of haptic enabled device 102 may be physically moved within one or more degrees of freedom. For example, a user may move the tilt-based input device 122 forward, backwards, left or right relative to the user. When a user moves the tilt-based input device 122, the tilt-input sensor 123 may detect the movement and/or position of the manipulandum, i.e., the tilt-based input and transmit a tilt-input signal to processor 112. Processor 112 then communicates or transmits the tilt-input signal to computer system 104. Based on the received tilt-input signal, computer system 104 performs actions within the running application, such as updating a virtual environment, for example by moving the avatar of a user through the environment. The movement of the tilt-based input device 122 represents input from the user which allows the user to interact with the software applications running on computer system 104, including but not limited to video games relating to first person shooters, third person character interaction, vehicle related games, or computer simulations, as well as other computing tasks. The tilt-based input device 122 thus provides the computer system 104 with a tilt-input signal according to the tilt-based input detected by the tilt-input sensor 123. The tilt-based input is provided by a user to cause the movement of a computer generated graphical object, such as a cursor or other image, or some other graphical object displayed by the computer system 104 via the visual display 106, or to control a virtual character or gaming avatar, such as a person, vehicle, or some other entity that may be found in a game or computer simulation.

In addition to receiving tilt-input signals from the tilt-input sensor 123, the processor 112 also receives haptic output commands from computer system 104 relating to haptic effects to be output by the haptic actuator(s) 118. Computer system 104 provides high level haptic output commands to the processor 112, such as the type of haptic effect to be output (e.g. vibration, jolt, detent, pop, force, heat etc.) by haptic actuator(s) 118. The processor 112 receives the high level haptic output commands from the computer system 104. The processor 112 then processes the received haptic output commands to provide haptic output commands in the form of control, actuation, and/or drive signals to the haptic actuator(s) 118. Processor 112 may provide haptic output commands to the haptic actuator(s) 118 to cause haptic effects with particular characteristics (e.g. magnitude, frequency, duration, etc.) consistent with the high-level received haptic output commands. The processor 112 may retrieve information about the type, magnitude, frequency, duration, or other characteristics of the haptic effect consistent with the haptic output commands from the local memory 114 coupled thereto. Depending on game actions and control signals received from the computer system 104, the processor 112 may send haptic output commands to the haptic actuator(s) 118 to output any of a wide variety of haptic effects or sensations, including vibrations, detents, textures, jolts, forces, temperature effects, and/or pops.

The haptic actuator(s) 118 may be inertial, kinesthetic, force-feedback, electro-adhesive, and/or other actuators as known to those of ordinary skill in the art of virtual reality systems. Possible actuators include but are not limited to eccentric rotating mass ("ERM") actuators in which an eccentric mass is moved by a motor, linear resonant actuators ("LRAs") in which a mass attached to a spring is driven back and forth, piezoelectric actuators, electromagnetic motors in which an eccentric mass is moved by a motor, vibrotactile actuators, inertial actuators, shape memory alloys, electro-active polymers that deform in response to signals, mechanisms for changing stiffness, electrostatic friction (ESF), ultrasonic surface friction (USF), or any combination of actuators described above. In another embodiment, the actuator may use kinesthetic haptic feedback actuators including, for example, solenoids to change the stiffness/damping of the tilt-based input device 122 and/or housing 120, small air bags that change size in the tilt-based input device 122 and/or housing 120, or shape changing materials. In some implementations, in which the haptic enabled device 102 includes a trigger or button, the haptic actuator(s) 118 may be a device configured to provide resistance or assistance for trigger pulls and button presses.

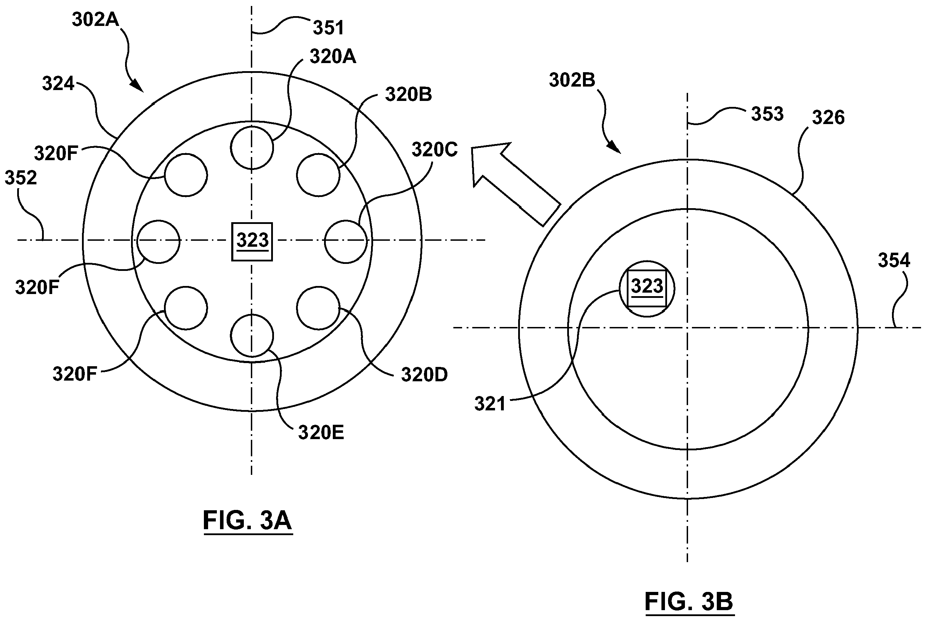

As previously stated, haptic enabled device 102 is merely an example embodiment of a haptic enabled device and haptic enabled devices with other configurations, shapes, and sizes may be used. For example, FIGS. 3A and 3B illustrate embodiments of haptic enabled devices that may be utilized in embodiments in accordance herewith. FIGS. 3A and 3B are plan views of the haptic enabled devices 302A, 302B. The haptic enabled devices 302A, 302B receive tilt-based input from a user and provide related haptic feedback. As illustrated in FIGS. 3A and 3B, the haptic enabled devices 302A, 302B are circular control devices and receive tilt-based input according to their rotation or orientation with respect to a reference axis.

Haptic enabled device 302A includes multiple haptic actuators 320A-320H spaced around a circular periphery of a housing 324. The haptic enabled device 302A further includes a tilt-input sensor 323 configured for detecting a direction of tilt applied to the haptic enabled device 302A. The haptic enabled device 302A may thus function as a tilt-based input device. The direction of tilt is representative of the tilt-based input. The tilt-input sensor 323 detects the tilt-based input and provides a tilt-input signal to a processor, either local to the haptic enabled device 302A or associated with a computer system to which the haptic enabled device 302A is in communication with.

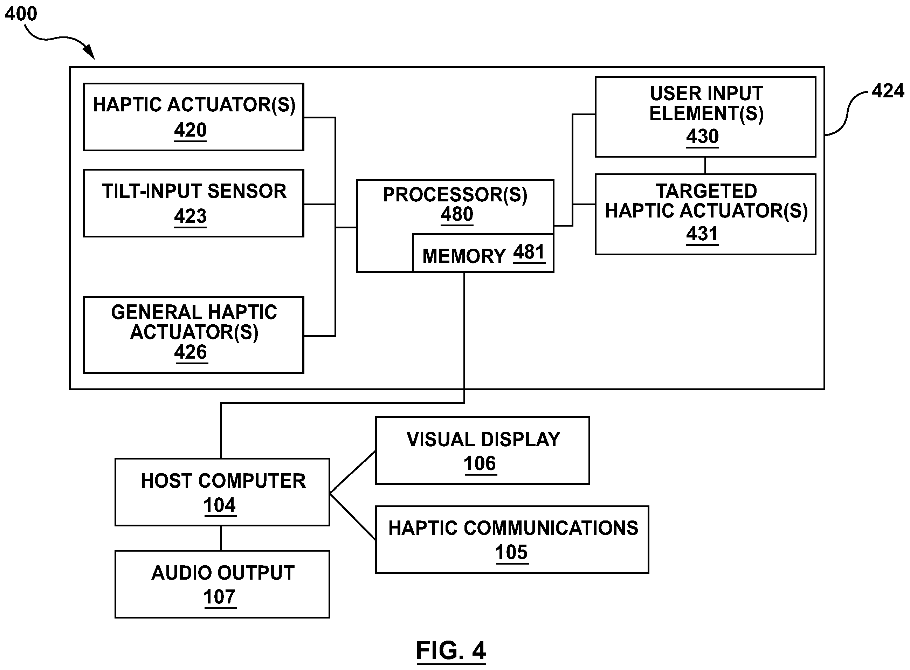

The multiple haptic actuators 320A-320H of the haptic enabled device 302A may be selected for activation to provide feedback related to the tilt-based input received from the haptic enabled device 302A. Haptic enabled device 302A may be tilted, e.g., by a user, around axes 351 and 352 in combination. For example, haptic enabled device 302A may be tilted around axis 351, around axis 352, and/or around both axes 351, 352 at the same time. For example, the haptic enabled device 302A may be tilted around axis 352 in a direction towards the peripheral haptic actuator 320A. The haptic actuator 320A towards which it is tilted may then be used to provide haptic feedback to indicate the tilt of the haptic enabled device 302A. In some examples, the magnitude or other characteristic of the haptic feedback may be adjusted according to the degree of tilt. Additional features of the haptic enabled device 302A are illustrated with respect to FIG. 4.

The haptic enabled device 302B includes a single haptic actuator 321 configured to move within, i.e., relative to, the housing 326 of haptic enabled device 302B. The haptic actuator 321 further includes a tilt-input sensor 323 configured for detecting a direction of tilt applied to the haptic enabled device 302B. The haptic enabled device 302B may thus function as a tilt-based input device. The single haptic actuator 321 of the haptic enabled device 302A may have its position altered according to a direction of tilt of the haptic enabled device 302B and provide feedback related to the tilt-based input detected by the tilt-input sensor 323 of the haptic enabled device 302B. As illustrated in FIG. 3B, tilt of the haptic enabled device 302B in the direction of the arrow causes the haptic actuator 321 to move in the direction of the tilt. Haptic enabled device 302B may be tilted around axes 353 and 354 in any combination. For example, haptic enabled device 302B may be tilted around axis 353, around axis 354, and/or around both axes 353, 354 at the same time. The haptic enabled device 302B may be tilted in a direction and the haptic actuator 321 may be moved to a location within the haptic enabled device 302B according to the tilt. The haptic actuator 321 may then be used to provide haptic feedback to indicate the tilt of the haptic enabled device 302B. In some examples, the magnitude or other characteristic of the haptic feedback may be adjusted according to the degree of tilt. The degree of tilt may be measured by the tilt-input sensor 323, by detecting distance and direction of the tilt-input sensor 323 with respect to the center of the haptic enabled device 302B, i.e., the vertex 355 of axes 353 and 354. The distance and direction of the tilt-input sensor 323 with respect to the vertex 355 may be measured via a mechanical connection, e.g., a spring, between the tilt-input sensor 323 and or via electrical monitoring, such as electrical contacts, cameras, and/or other sensors. In some alternative embodiments, tilt-input sensor 323 may be stationary, located at the vertex 355 and including one or more tilt sensors and/or accelerometers for measuring the degree of tilt of haptic enabled device 302B. Additional features of the haptic enabled device 302B are described with respect to FIG. 4.

In some implementations, the haptic enabled devices 302A and 302B may be configured in a disk shape and may include the at least one tilt-input sensor 323, e.g., accelerometers or other tilt-sensing transducers, to determine an orientation of the device and an amount of tilt around one or more axes. In some implementations, the haptic enabled devices 302A and 302B may be mounted atop a stalk or member that may provide support for the device when it is tilted. In some implementations, the haptic enabled devices 302A and 302B may be configured for foot control, wherein a user may place their feet or foot on the haptic enabled devices 302A and 302B and use the feet or foot to create tilt in the devices. In some implementations, haptic enabled devices 302A and 302B may be configured for handheld use.

FIGS. 3A and 3B illustrate embodiments that include the haptic enabled devices 302A and 302B configured with a shared housing containing respective haptic actuators and tilt-input sensors. Thus, the haptic enabled devices 302A and 302B may function as tilt-input devices. A block diagram consistent with the haptic enabled devices 302A, 302B is provided in FIG. 4. FIG. 4 illustrates components of a haptic enabled device 400, which is consistent with haptic enabled devices 302A and 302B. The components illustrated in FIG. 4 for the haptic enabled device 400 may also be found in the haptic enabled devices 302A, 302B.

FIG. 4 illustrates a block diagram of the haptic enabled device 400 for use in a system that further includes computer system 104, haptic communication unit 105, visual display 106, and audio output unit 107. A housing 424 of haptic enabled device 400 is shaped to accommodate one or two hands gripping the device, a foot or feet resting on the device, or any other suitable form factor. Those skilled in the art would recognize that haptic enabled device 400 is merely an exemplary embodiment of a controller, and that controllers with other configurations of user input elements, shapes, and sizes may be used.

Haptic enabled device 400 includes one or more haptic actuators 420 for providing tilt-input haptic feedback and at least one tilt input sensor 423. Haptic enabled device 400 may further include one or more user input elements or manipulanda 430, including one or more triggers, button, joysticks, touchpads, or other input elements. As used herein, the user input element 430 refers to an interface device such as a trigger, button, joystick, or the like, which is manipulated by the user to interact with computer system 104. More than one type of user input element, as well as other types of user input elements, may be included on haptic enabled device 400. Accordingly, the present description of a user input element 430, for example, does not limit haptic enabled device 400 to a single user input element.

As can be seen in the block diagram of FIG. 4, the haptic enabled device 400 may include at least one targeted haptic actuator 431 to directly drive any or each of the user input elements 430 thereof as well as one or more general haptic actuators 426 coupled to housing 424 to provide general haptic effects. The targeted haptic actuators 431 may each be associated with a user input element 430, to provide haptic effects specific to the associated user input element. Targeted haptic actuators 431 may include actuators such as force-feedback actuators, vibrotactile actuators, and any other actuator suitable for providing haptic effects to a specific user input element. The general haptic actuators 426 may be coupled to the housing 424 and thus may be configured to provide haptic effects to the housing as whole. General haptic actuators 426 may include vibrotactile actuators configured for a rumble effect and any other actuator suitable for providing general haptic effects to the housing 424. In some implementations, both the general haptic actuators 426 and the targeted haptic actuators 431 may also be actuated to provide tilt-input haptic feedback.

Haptic enabled device 400 may further include at least one processor 480 and computer memory 481. Processor(s) 480 may be coupled electrically to the various components of haptic enabled device 400 to provide instructions such as drive commands and receive signals such as inputs from the various components. Processor(s) 480 may further be electrically coupled to host computer 104, to provide tilt-based inputs to host computer 104 and to provide additional inputs to host computer that may be generated by the various user input elements 430. Processor(s) 480 may further be configured to receive haptic output commands from host computer 104 and actuate the various haptic actuators 420, 426, and 431 of the haptic enabled device 400 in response.

Haptic enabled device 400 may output to a user general haptic effects via general haptic actuators 426, targeted haptic effects via targeted haptic actuators 431, and tilt response haptic effects via haptic actuators 420. The collective haptic effects may provide the user with a greater sense of immersion to the game as multiple modalities are being simultaneously engaged, *e.g.,* video, audio, and haptics. Similar to the haptic enabled device 102 and computer system 104, the haptic enabled device 400 may be configured to communicate with computer system 104, e.g., via haptic communication unit 105. Processor 480 of the haptic enabled device 400 may be coupled to each haptic actuator to provide haptic output commands based on high level haptic output commands received from the computer system 104. The haptic actuators 420, 426, 431 of the haptic enabled device 400 may be any type of haptic actuator listed herein for the haptic actuator(s) 118 of haptic enabled device 102.

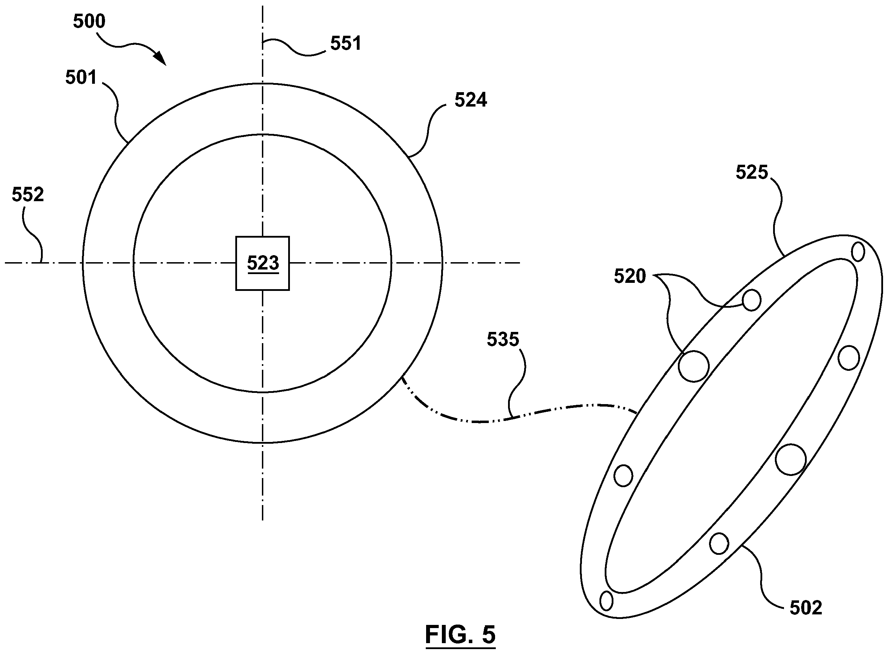

FIG. 5 illustrates a haptic enabled tilt-based input system 500 including a haptic enabled device 502 and a tilt-based input device 501 according to another embodiment wherein the haptic enabled device 502 and the tilt-based input device 501 do not include a common housing. The tilt-based input device 501 may include a housing 524 and at least one tilt-input sensor 523. The housing 524 may include a form factor such as a tiltable disk, a tiltable bar, a wand, a glove, or other appropriate device for providing a tilt-based input. The tilt-based input device 501 may be tilted around the axes 551, 552 in any combination, as discussed above with respect to haptic enabled device 302A, 302B.

The tilt-based input device 501 may be in electric communication with the haptic enabled device 502 via the connection 535. The connection 535 may be a direct, wired connection between the tilt-based input device 501 and the haptic enabled device 502. The connection 535 may be a wireless connection, using any suitable wireless protocol. In some implementations, the connection 535 may be an indirect connection, passing through a third device or system, such as the host computer 104.

The haptic enabled device 502 may include one or more haptic actuators 520 configured to provide haptic outputs responsive to tilt-based inputs detected by the tilt-based input device 501. The haptic enabled device 502 may include a housing 525. As illustrated in FIG. 5, the housing 525 of the haptic enabled device 502 may take the form factor of a bracelet, wherein the haptic actuators 520 located around the bracelet may be configured to provide haptic outputs responsive to tilt-based inputs according to the direction, magnitude, etc., of the tilt-based inputs. The haptic enabled device 502 illustrated in FIG. 5 is exemplary only, and alternative form factors, including headbands, necklaces, belts, vests, etc., remain consistent with embodiments in accordance herewith. In some implementations, the haptic enabled device 502 may comprise multiple devices, each comprising its own housing 525 and one or more haptic actuators 520. In such an implementation, the multiple housings 525 may be arranged at different locations around a user's body to provide haptic effects as feedback to a tilt-input. The multiple housings 525 may be physically connected, e.g., via wires, in some implementations and may be entirely separate in other implementations. In implementations where the multiple housings 525 are not physically connected, each may include components necessary for communication with other housings 525 of the haptic enabled device 502, with the host computer 104, and with the tilt-based input device 501.

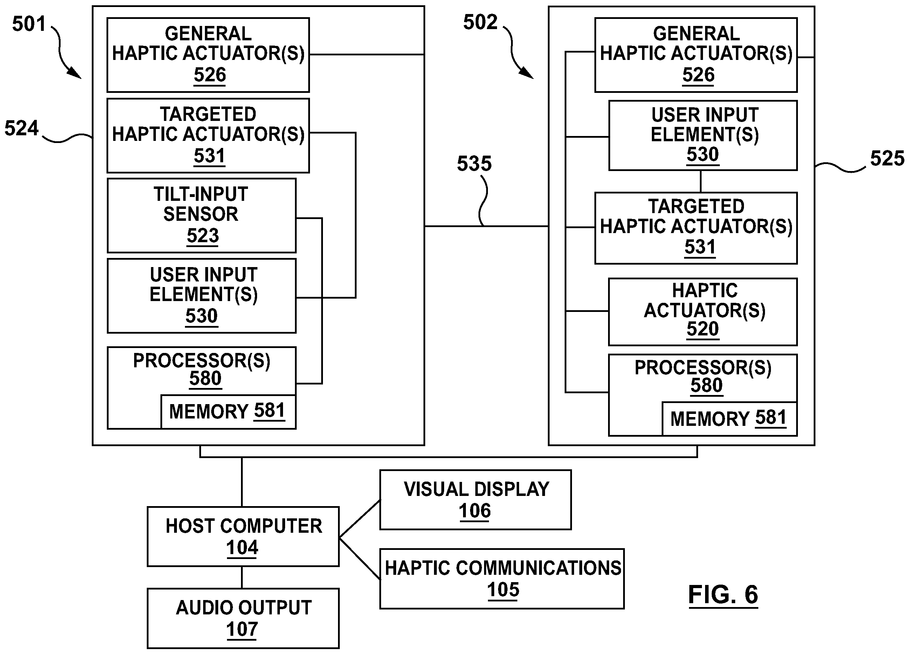

FIG. 6 illustrates a block diagram of the haptic enabled tilt-based input system 500. The tilt-based input device 501 and the haptic enabled device 502 may be used in a system that further includes computer system 104, haptic communication unit 105, visual display 106, and audio output unit 107.

Many of the components of the tilt-based input device 501 and the haptic enabled device 502, as illustrated in FIG. 6 are optional. The tilt-based input device 501 includes at least one tilt input sensors 523. Haptic enabled device 502 includes one or more haptic actuators 520 configured to provide haptic feedback in response to a tilt-based input. Further components illustrated in FIG. 6 may be optionally included in tilt-based input device 501 and/or haptic enabled device 502.

Both the tilt-based input device 501and the haptic enabled device 502 may include one or more of at least one processor 580 and computer memory 581, at least one user input element 530, at least one targeted haptic actuator 531, and at least one general haptic actuator 526. Each of these components may be similar to those described above with respect to FIG. 4

As can be seen in the block diagram of FIG. 6, the targeted haptic actuator(s) 531 may directly drive any or each of the user input element(s) 530 and the general haptic actuator(s) 526 are coupled to the housing 524, 525 to provide general haptic output effects. The processor(s) 580 may be coupled electrically to the various components of tilt-based input device 501 and haptic enabled device 502 to provide instructions such as drive commands and receive signals such as inputs from the various components. The processor(s) 580 may further be electrically coupled to host computer 104, to provide tilt-based inputs to the host computer 104 and to provide additional inputs to the host computer 104 that may be generated by the various user input elements 530. The processor(s) 580 may further be configured to receive haptic output commands from host computer 104 and actuate the various haptic actuators 520, 526, and 531 of the tilt-based input device 501 and the haptic enabled device 502 in response.

As illustrated in FIGS. 5 and 6, the tilt-based input device 501 and the haptic enabled device 502 may be provided with separate housings. Thus, these two devices may be located and used in different locations. For example, a tilt-based input device 501 may be a device configured to receive input from a user's foot or feet, while the associated haptic enabled device 502 may be configured as a wearable bracelet, belt, headband, or vest to provide haptic outputs responsive to the tilt-based inputs of the tilt-based input device 501. In another example, the tilt-based input device 501 may include one or more wand devices, while the associated haptic enabled device 502 may be configured as a wearable bracelet, belt, headband, or vest. In yet another example, the tilt-based input device 501 may include a head-mounted device, such as a VR or AR headset.

The tilt-based input devices 501 and the haptic enabled devices 502 discussed with respect to FIGS 5 and 6 are exemplary only, and a person of skill in the art will recognize that various form factors may be used. Further, any form factor discussed herein for these devices may be used in various embodiments.

Regardless of which haptic enabled device configuration or embodiment is utilized, the computer system processor and/or the processor of the haptic enabled device may be configured to provide haptic feedback in response to tilt-based inputs. The system processor and/or the device processor may create a haptic output command configured to generate haptic effects in response to tilt-based inputs detected by tilt-based input devices. For example, software instructions executed on a computer system processor may include haptic output commands to generate haptic effects.

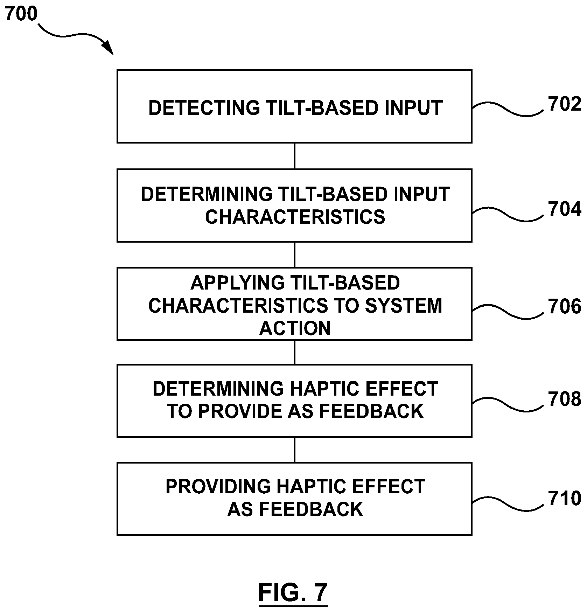

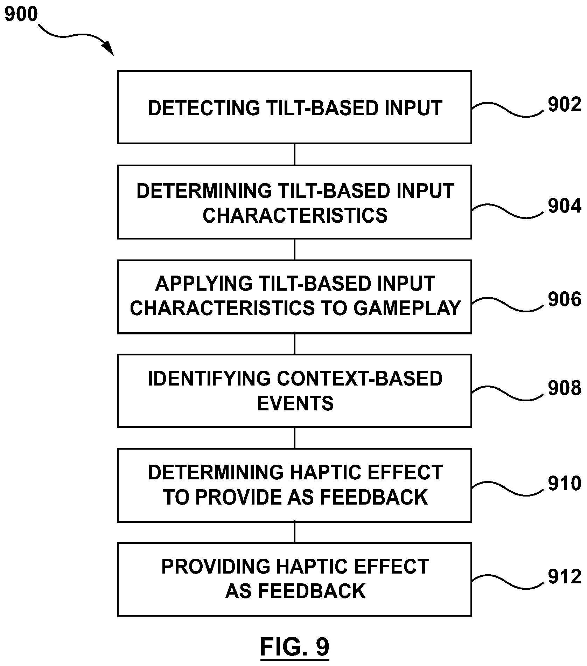

FIGS. 7 and 9 are flow diagrams illustrating functionality of systems described herein in carrying out haptic feedback in response to a tilt-based input. In embodiments, the functionality of the process diagrams of FIGS. 7 and 9 may be implemented by software and/or firmware stored in the memory of the computer system and executed by the computer system processor, and/or the memory of the haptic enabled device and executed by the haptic enabled device processor. In other embodiments, the functionality may be performed by hardware, through the use of an application specific integrated circuit ("ASIC"), a programmable gate array ("PGA"), a field programmable gate array ("FPGA"), and/or any combination of hardware and software. In some embodiments, functionality of the process diagram of FIGS. 7 and 9 may be carried out by processors associated with the computer system, the tilt-based input device, and the haptic enabled device, depending on the embodiment. It will be understood by one of ordinary skill in the art that the functionality of FIGS. 7 and 9 may be performed by devices and systems consistent with computer systems, tilt-based input devices, and haptic enabled devices as described herein.

FIG. 7 is a flow chart illustrating a process of providing tilt-input haptic feedback. Tilt-input haptic feedback may be provided in response to a tilt-based input to give feedback conveying information about the tilt-based input characteristics. Tilt-input haptic feedback is provided in accordance with characteristics of a tilt-based input. For example, the tilt-input haptic feedback may provide information about a direction and/or a magnitude of a tilt-based input. A user operating a tilt-based input device may, for example, control movement of an avatar in a VR gamespace through tilting of the device. Haptic feedback may be provided to the user in response to tilt-based input to assist the user in understanding the magnitude and direction of the applied input, which may, for example, correlate with an in-game direction and speed of the avatar.

In a tilt-input haptic feedback process 700, an operation 702 includes detecting tilt-based input. The tilt-based input may be detected by a tilt-based input device, which may output a tilt-input signal in accordance with the tilt-based input. The tilt-input signal may be received by any processor associated with the system, e.g., as located in a computer system, in a tilt-based input device, and/or in a haptic enabled device. Tilt-based input may be detected according to rotation around a tilt-axis, including a pitch axis, roll axis, and or yaw axis. Rotation around the tilt-axis may be detected with respect to one or more reference points of the tilt-based input device.

In the tilt-input haptic feedback process 700, an operation 704 includes determining one or more characteristics of the tilt-based input according to the tilt-input signal. Characteristics may include, for example, a direction and a magnitude of the tilt-based input. A direction of the input may be determined according to tilt measured around the three tilt axes, e.g., pitch, roll, and yaw. Measurement of tilt around a single axis may provide directional information in a single dimension - e.g., backwards and forwards or left and right. For example, a seesaw style tilt-based input device may permit a user to provide left/right tilt-based input. Measurement of tilt around two axes may provide directional information in a two-dimensional space - e.g., forwards, backwards, left, and right. A disc shaped tilt-based input device may be used to detect such input. Measurement of tilt around three axes may permit a user to provide directional input in a three-dimensional space. In addition to direction, tilt magnitude may be measured. For example, a degree of tilt may be measured. Tilt-based input characteristics may be computed and/or stored in any suitable format, including, for example, vectors and/or angle and magnitude measures.

In the tilt-input haptic feedback process 700, an operation 706 includes applying the tilt-based input characteristics to a system action. System actions may be gameplay actions, including, e.g., avatar movement. System actions may further include administrative or productivity actions, such as list scrolling, file system navigation, word processor usage, etc. Tilt-based input characteristics may be applied to system actions in any suitable fashion.

In the tilt-input haptic feedback process 700, an operation 708 includes determining a haptic effect to provide as feedback. The haptic effect provided as feedback may be determined by a processor associated with the system at least partially in response to the tilt-based input characteristics. The haptic feedback may further be determined at least partially in response to system actions caused by the tilt-based input characteristics. Thus, in some implementations, the haptic effect determined may convey information to a user about the generated tilt-based input characteristics. For example, a haptic actuator may provide a haptic output, such as a vibration, in a location and magnitude that reflects the direction and magnitude of the detected tilt-based input. In further implementations, the haptic effect determined may convey information to a user about the system action caused by the tilt-based input. For example, a haptic actuator may provide a haptic output, such as a vibration, in a location and magnitude that reflects the direction and speed of avatar movement in response to the tilt-based input. Due to possible in-system limitations, avatar movement may not correlate perfectly with a tilt-based input - for example, an avatar may be slowed due to environmental obstacles and/or may have a maximum travel speed. Accordingly, the haptic feedback provided may correlate with and reflect the in-game or in-system results of the tilt-based input, rather than the magnitude and direction of the tilt-based input itself. If an avatar reaches a maximum speed, for example, increasing a tilt magnitude will not increase avatar speed, and will therefore also not cause an increased haptic effect. In some implementations, multiple haptic effects may be determined according to both tilt-based input characteristics and system response simultaneously or according to a combination of the two.

The haptic feedback may be defined according to haptic characteristics, including location, magnitude, and type of response. The haptic characteristics may be determined so as to correlate with and/or be indicative of the tilt-based input characteristics and/or the system response to the tilt-based input. For example, a location and magnitude of the haptic effect may correlate with a direction and magnitude of a tilt-based input. The type of haptic effect, e.g., whether a response is a vibration or other type of actuation, may also be modified according to the tilt-based input characteristics and/or the system response to the tilt-based input

In the tilt-input haptic feedback process 700, an operation 710 includes determining haptic effects to provide as feedback through at least one haptic actuator. The determined haptic effect may be provided to at least one haptic actuator via a haptic output command and/or via a drive signal. The at least one haptic actuator may be determined or selected from among multiple haptic actuators according to the characteristics of the determined haptic effect. For example, the at least one haptic actuator may be selected according to the location, required magnitude, and/or type of response defined by the characteristics.

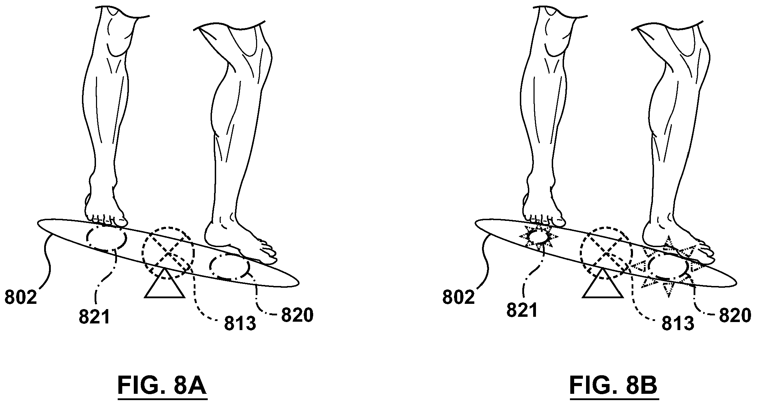

FIGS. 8A and 8B illustrate an example of the process of FIG. 7. As illustrated in FIG. 8A, a user may operate a haptic enabled tilt-based input device 802 having haptic actuators 820, 821. In FIG. 8A, the user is applying a tilt-based input to the foot-controlled seesaw style haptic enabled tilt-based input device 802. The haptic enabled tilt-based input device 802 is rotated around axis 813. As shown in FIG. 8B, the haptic actuator 820 associated with the direction of the tilt is activated according to the magnitude of the tilt. A greater magnitude of tilt will result in increases to the strength of the haptic effect, e.g., increased magnitude and/or frequency, produced by the haptic actuator 820. The haptic actuator 821 on an opposite end of the haptic enabled tilt-based input device 802 is not activated or minimally activated.

FIG. 9 is a flow chart illustrating a process of providing contextual tilt-input haptic feedback. Contextual tilt-input haptic feedback is provided to convey information about a system context, and may be provided in accordance with characteristics of a tilt-based input. System contexts refer to details in the operation of a system with which a user is interacting via a tilt-based input device. System contexts may include gameplay events and actions, system environment details, system administrative notifications, and other information about the operation of a system. In a gaming environment, system context may include information about gaming events, such as explosions, sounds, and other in-game items. System environmental details may further include details provided in a virtual or augmented reality world in a non-gaming context. Administrative notifications may include, for example, notifications about tasks being completed or to be performed.

The contextual tilt-input haptic feedback may include feedback characteristics, e.g., location, magnitude, haptic effect type, selected to provide information to a user about the system context. For example, in a gaming environment, a location and magnitude of a haptic effect may be indicative of an in-system direction and strength of an effect, such as an explosion, collision, or noise. A haptic effect may be provided in a specific location to convey information about in-system direction of the effect. The provision of haptic feedback provided in response to in-system directions is consistent with haptic feedback provided in response to tilt-based input. For example, where a tilt-based input device and haptic enabled device share a housing, the same location used to indicate directionality of movement in tilt-input haptic feedback may be used to indicate directionality of a system context event. The same may apply in embodiments where a tilt-based input device and a haptic enabled device do not include a common housing. For example, the haptic actuator location on a bracelet that indicates tilt-based input in a specific direction may also be used to indicate a system context event coming from the same location. Location selection of a haptic actuator may be performed similarly in other system contexts as well.

In some implementations, contextual tilt-input haptic feedback may also be at least partially based on a tilt-based input. For example, in a gaming environment, a user may provide a tilt-based input that moves an avatar towards an event, e.g., a helicopter with turning blades. As the avatar draws closer in response to the tilt-based input, a haptic effect provided to the user may increase in magnitude. In another implementation, in an administrative task environment, a user may use a tilt-based input to scroll through a list. As the user draws nearer to the end of the list, a haptic effect provided to the user may increase in magnitude indicating that the user is approaching the end of the list. Thus, the contextual tilt-input haptic feedback may be provided according to both a system context and a tilt-based input.

In a contextual tilt-input haptic feedback process 900, an operation 902 includes detecting tilt-based input, e.g., with a tilt-input sensor. The detected tilt-based input may be received by a processor associated with the system. Tilt-based input may be detected according to rotation around a tilt-axis, including a pitch axis, roll axis, and or yaw axis. Rotation around the tilt-axis may be detected with respect to one or more reference points of the tilt-based input device.

In the contextual tilt-input haptic feedback process 900, an operation 904 includes determining one or more characteristics of the tilt-based input. Characteristics may include, for example, a direction and a magnitude of the tilt-based input. A direction of the input may be determined according to tilt measured around the three tilt axes, e.g., pitch, roll, and yaw. Measurement of tilt around a single axis may provide directional information in a single dimension - e.g., backwards and forwards or left and right. For example, a seesaw style tilt-based input device may permit a user to provide left/right tilt-based input. Measurement of tilt around two axes may provide directional information in a two-dimensional space - e.g., forwards, backwards, left, and right. A disc shaped tilt-based input device may be used to provide such input. Measurement of tilt around three axes may permit a user to provide directional input in a three-dimensional space. In addition to direction, tilt magnitude may be measured. For example, a degree of tilt may be measured. Tilt-based input characteristics may be computed and/or stored in any suitable format, including, for example, vectors and/or angle and magnitude measures.

In the contextual tilt-input haptic feedback process 900, an operation 906 includes applying the tilt-based input characteristics to a system action. System actions may be gameplay actions, including, e.g., avatar movement. System actions may further include administrative actions, such as list scrolling and file system navigation. Tilt-based inputs may be applied to system actions in any suitable fashion.

In the contextual tilt-input haptic feedback process 900, an operation 908 includes identifying context-based events. Context-based events include any events or operations that occur within a system that the user is interacting with, such as a virtual or augmented reality world, an administrative system, and others. Context-based events may include, as discussed above, gameplay events, system administrative events, and other environmental events.

In the contextual tilt-input haptic feedback process 900, an operation 910 includes determining a haptic effect to provide as feedback. The haptic effect is determined at least partially in response to the identified context-based events. In some implementations, the haptic effect may be determined in accordance with both context-based events and tilt-based input characteristics, in combination. The haptic effect may be determined to convey information to a user about context-based events and/or about the tilt-based input. For example, a haptic actuator may provide a haptic effect, such as a vibration, in a location and magnitude that reflects the direction and magnitude of an in-system event. In another example, a location and magnitude of a haptic effect reflective of an in-system event may be adjusted in response to a tilt-based input, as a user maneuvers an avatar towards or away from the event.

The haptic effect may be defined according to haptic characteristics, including location, magnitude, and type of response. The haptic characteristics are determined to correlate with and/or be indicative of the context-based events and may also be determined to correlate with and/or be indicative of the tilt-based input. For example, a location and magnitude of the haptic effect may correlate with a direction and magnitude of a context-based event. The type of haptic effect, e.g., whether an effect is a vibration or other type of actuation, may also be modified according to the contextual events and/or the tilt-based input characteristics.

In the contextual tilt-input response process 900, an operation 912 provides the determined haptic effect to at least one haptic actuator as feedback. The determined haptic effect may be provided to at least one haptic actuator via a haptic output command and/or via a drive signal. The at least one haptic actuator may be determined or selected according to the characteristics of the determined haptic effect. For example, the at least one haptic actuator may be selected according to the location, required magnitude, and/or type of response defined by the characteristics.

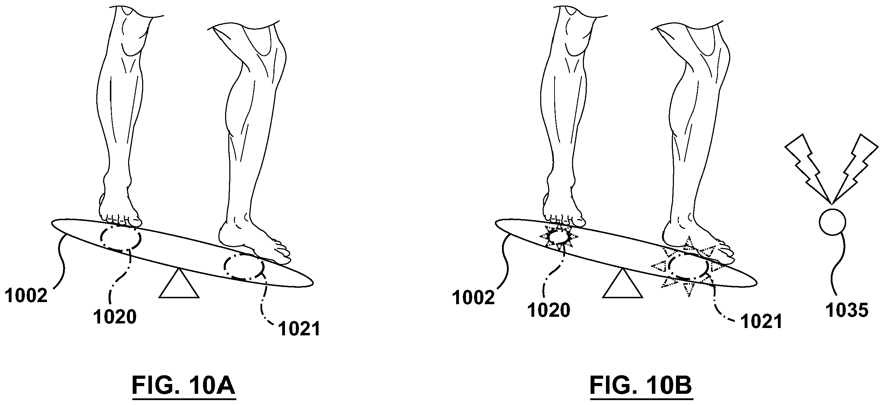

FIGS. 10A and 10B illustrate an example of the process of FIG. 9. As illustrated in FIG. 10A, a user operates a foot based haptic enabled tilt-input device 1002 including a pair of haptic actuators 1020 and 1021. As shown in FIG. 10A, the user is tilting the tilt-based input device towards the haptic actuator 1021 to generate a tilt-based input. When a system event 1035, such as an explosion, occurs, the system determines a haptic effect as feedback according to the context-based system event 1035 and the tilt-based input being provided by the user. The haptic effect causes a greater magnitude of actuation of the haptic actuator 1021, e.g., in the direction corresponding to the tilt-based input and the context-based system event 1035.

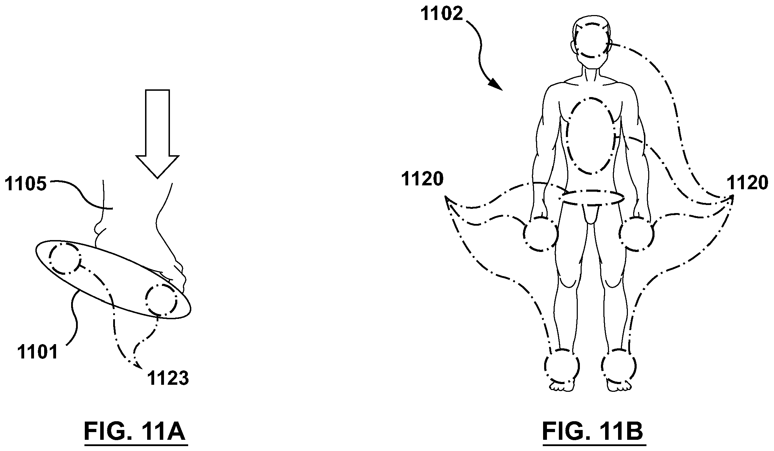

FIGS. 11A-15E illustrate additional embodiments of haptic enabled tilt-based input devices and haptic enabled tilt-based input systems according to embodiments of the invention.

FIGS. 11A and 11B illustrate a haptic enabled tilt-based input system including a tilt-based input device and multiple haptic enabled output devices. The haptic enabled tilt-based input system 1102 includes a tilt-based input device 1101 comprising one or more tilt-input sensors 1123. The tilt-based input device 1101 may be operable by a single hand 1105 of a user. Some implementations may include a tilt-based input device 1101 requiring two-handed operation. The tilt-based input device 1101 may detect a tilt-based input provided by a user. The system 1102 may further include one or more haptic enabled devices 1120, each including a haptic actuator, and configured for location at various portions of the body of a user. The haptic enabled tilt-based input system 1102 may further include any or all of the components of the haptic enabled device 502 and the tilt-based input device 501 described above with respect to FIGS. 5 and 6. Haptic enabled devices 1120 consistent with the system 1102 may include belts, bracelets, watches, helmets, masks, chest-coverings, ankle bracelets, and any other wearable item that may be configured to include a haptic actuator for providing a haptic effect at a specific body location. Haptic actuators of the haptic enabled devices 1120 are actuated to provide tilt-input feedback to appropriate body locations according to tilt-based input characteristics and/or context-based events. For example, haptic actuators arranged on a left side of the body may be activated to indicate a tilt-based input that causes an avatar to move left. In another example, haptic actuators in a specific location on the body may be activated according to a virtual location of a context-based event in comparison to the user's avatar.

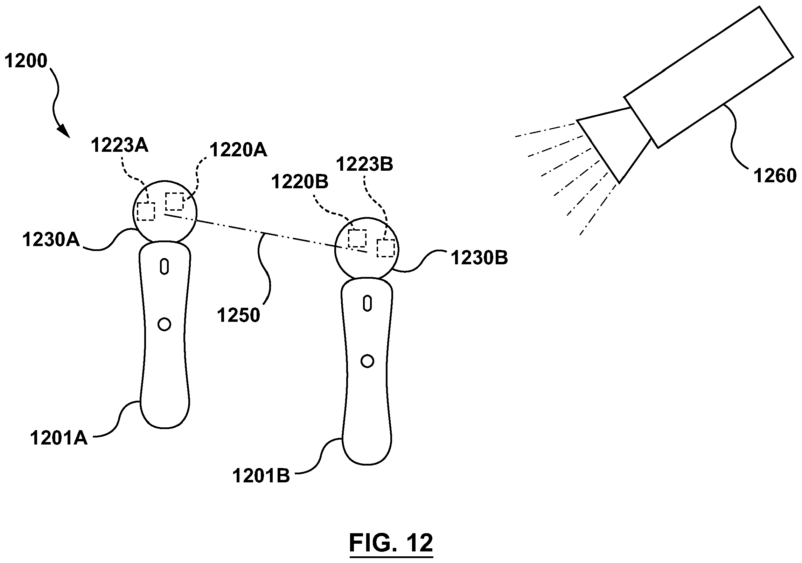

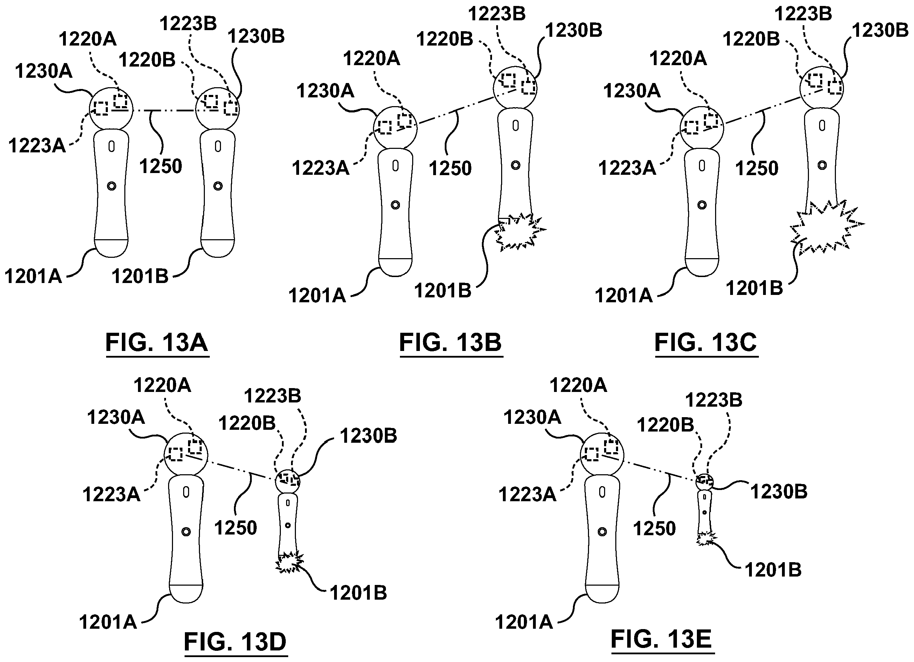

FIG. 12 illustrates a haptic enabled tilt-based input system 1200 including two haptic enabled tilt-based input device 1201A, 1201B. The haptic enabled tilt-based input devices 1201A, 1201B include one or more tilt-input sensors 1223A, 1223B and one or more haptic actuators 1220A, 1220B. The haptic enabled tilt-based input system 1200 may further include any or all of the components of the haptic enabled device 400 described above with respect to FIGS. 3 and 4. In the system 1200, tilt may be measured based on relative locations of reference points 1230A, 1230B within each haptic enabled tilt-based input device 1201A, 1201B. As illustrated in FIG 12, an imaginary line 1250 drawn between reference points 1230A, 1230B may form the basis of a tilt measurement. Tilt or rotation of the imaginary line about one or more imaginary tilt axes, as explained in greater detail with respect to FIGS. 13A-13E, may be detected as a tilt-based input. The position of the reference points 1230A, 1230B of the respective tilt-based input devices 1201A, 1201B may be determined, for example, by tilt-input sensors 1223A, 1223B, which may include accelerometers, radio chips, and other transducers that may be used to measure relative position. In some implementations, the position of the reference points 1230A, 1230B may be measured or determined by a camera 1260 that is able to detect the locations of the reference points 1230A, 1230B. Although illustrated as wands, haptic enabled tilt-based input devices 1201A, 1201B may have any suitable form factor, including gloves and ergonomically shaped controllers. In some implementations, haptic enabled tilt-based input devices 1201A, 1201B may have differing form factors within the same system 1200.

FIGS. 13A-13E illustrate various tilt operations a user may perform with a pair of haptic enabled tilt-based input devices 1201A, 1201B. In FIG. 13A, the pair of devices 1201A, 1201B are held such that the reference points 1230A and 1230B create no tilt around imaginary roll and yaw axes. That is, the reference points 1230A and 1230B are held at approximately the same height and distance from the user.

In FIG. 13B, the device 1201B is raised higher to create tilt around a roll axis. This tilt around a roll axis may translate, for example, into forward motion. Reverse motion may be generated by tilt around the roll axis in the other direction, e.g., by lowering the device 1201B. Magnitude of the motion gesture may be determined according to a degree of tilt, i.e., difference in heights between the reference points 1230A, 1230B. FIG. 13C illustrates a device 1201B raised higher to indicate faster movement. In response to the movements shown in FIGS. 13B and 13C, the system may provide a stronger haptic effect where a greater magnitude of tilt is shown, e.g., in FIG. 13C. The haptic effect may be provided by a haptic actuator 1220A, 1220B located so as to convey information to the user about the tilt-based input. In the examples of FIGS. 13B and 13C, this includes providing a haptic effect in the device 1201B.

FIGS. 13D and 13E illustrate the use of the devices 1201A, 1201B to create tilt around a yaw axis, by moving one of the devices 1201A, 1201B to a position further away from the user than the other device 1201A, 1201B. In FIG. 13D, the device 1201B is moved further away from the user than the device 1201A. In FIG. 13E, the difference in distances to the user between the device 1201B and the device 1201A is increased. The positioning of FIG. 13D indicates a move or turn to the right while the positioning of FIG. 13E indicates faster moving or turning to the right. In FIG. 13D, the device 1201B may produce a haptic effect in response to the tilt-based input and, in FIG. 13E, the device 1201B may produce a stronger magnitude haptic effect in response to the tilt-based input.

Although illustrated in FIGS. 12 and 13A-13E as integrated haptic and tilt-based input devices 1201, the tilt-based input devices 1201 of the system 1200 may be constructed so as not to include the haptic actuators 1220A, 1220B, which may be contained in a separate housing, as described above with respect to FIGS. 5 and 6. Although specific movements of the haptic enabled tilt-based input devices 1201 are illustrated in FIGS. 13A-13E and described with respect to gaming inputs or avatar movements these are exemplary only. The tilt-based inputs illustrated in these figures may be mapped to different avatar movements in further embodiments, and tilt-input haptic feedback effects may be modified accordingly. The tilt-based inputs illustrated in these figures may further be used for input to applications not requiring an avatar.

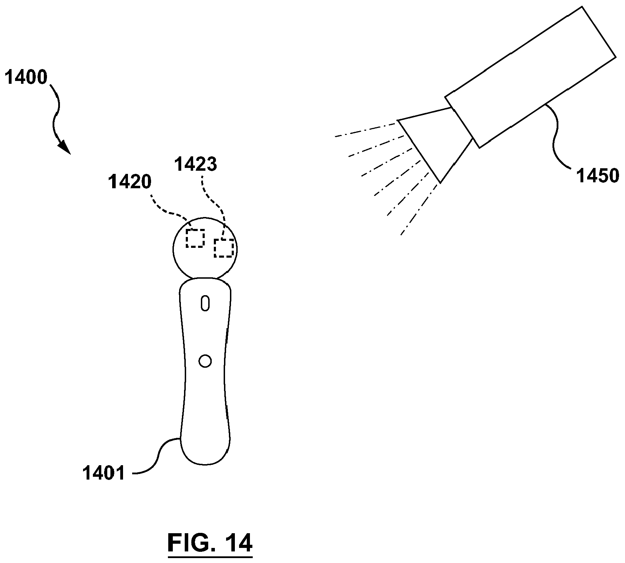

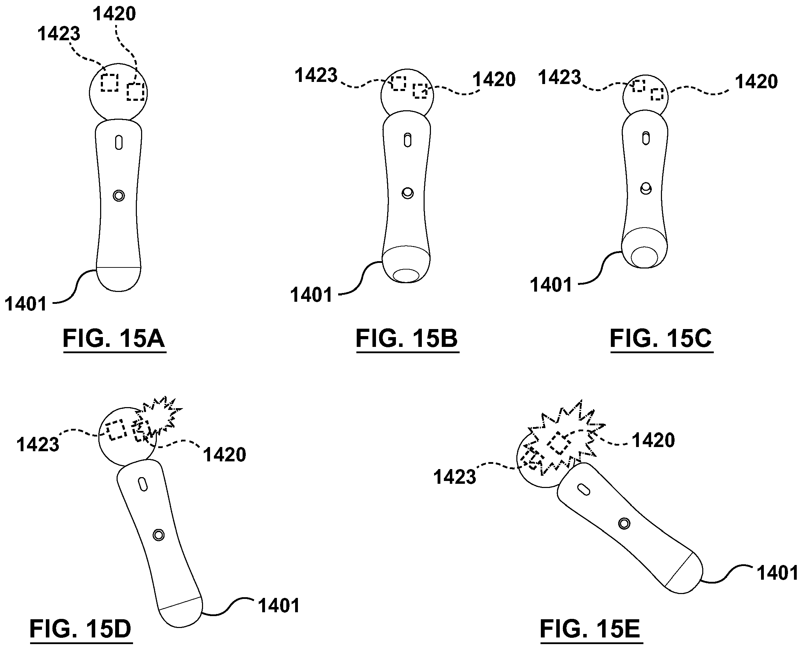

FIGS. 14 and 15A-15E illustrate a haptic enabled tilt-based input device 1401 comprising a single device configured as a wand. As illustrated in FIG. 14, the tilt-based input device 1401 may include one or more tilt-input sensors 1423 and one or more haptic actuators 1420 for providing a haptic effect. In some implementations, in lieu of or in combination with tilt-input sensor 1423, camera 1450 may be used to determine an orientation of the device 1401. In some implementations, the at least one haptic actuator 1420 may be included in a separate housing. The haptic enabled tilt-based input device 1401 may further include any or all of the components of the haptic enabled device 400 described above with respect to FIGS. 3 and 4.

FIGS. 15A-15E illustrate tilt-based movements that may be performed with haptic enabled tilt-based input device 1401. In FIG. 15A, the tilt-based input device 1401 is held such that there is no tilt around the pitch and roll axes. That is, the haptic enabled tilt-based input device 1401 is held approximately straight up and down.

In FIG. 15B the haptic enabled tilt-based input device 1401 is tilted forward to create tilt around the pitch axis. This tilt around the pitch axis may translate, for example, into forward motion. Reverse motion may be generated by tilt around the pitch axis in the other direction, e.g., by tilting the device back. Magnitude of the motion gesture may be determined according to a degree of tilt. FIG. 15C illustrates a haptic enabled tilt-based input device 1401 tilted further to indicate faster movement. In response to the movements shown in FIGS. 15B and 15C, the system may provide a stronger haptic effect where a greater magnitude of tilt is shown, e.g., in FIG. 15C. The haptic effect may be provided by the haptic actuator 1420 located so as to convey information to the user about the tilt-based input. In the examples of FIGS. 15B and 15C, this includes providing a haptic effect at the top of the haptic enabled tilt-based input device 1401. In another embodiment, in a reverse motion gesture, the haptic effect may be provided at the bottom of the haptic enabled tilt-based input device 1401.

FIGS. 15D and 15E illustrate the use of the haptic enabled tilt-based input device 1401 to create tilt around a roll axis, by tilting the device 1401 to the left. In FIG. 15D, the device 1401 is tilted further around the roll axis. The positioning of FIG. 15D indicates a move or turn to the left while the positioning of FIG. 15E indicates faster moving or turning to the left. In FIG. 15D, the device 1401 may produce a haptic effect as feedback to the tilt-based input and, in FIG. 15E, the device 1401 may produce a stronger magnitude haptic effect as feedback to the tilt-based input.

Although illustrated in FIGS. 14 and 15A-15E as an integrated haptic enabled tilt-based input device 1401, in some embodiments, the haptic actuators 1420 and tilt-input sensors 1423 may be located in a separate devices, e.g., a haptic enabled device and a tilt-based input device, similar to the embodiments described above with respect to FIGS. 5 and 6. Such an embodiment may further include any or all of the components of the haptic enabled device 502 and tilt-based input device 501 as described above with respect to FIGS. 5 and 6. Although specific movements of the haptic enabled tilt-based input device 1401 are illustrated in FIGS. 15A-15E and described with respect to avatar movements these are exemplary only. The tilt-based inputs illustrated in these figures may be mapped to different avatar movements in further embodiments, and tilt-responsive haptic effect outputs may be modified accordingly. The tilt-based inputs illustrated in these figures may further be used for input to applications not requiring an avatar.

Thus, there is provided systems, devices, and methods of generating haptic feedback or haptic effects in response to tilt-based inputs. While various embodiments according to the present invention have been described above, it should be understood that they have been presented by way of illustration and example only, and not limitation. It will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the appended claims and their equivalents. It will also be understood that each feature of each embodiment discussed herein, and of each reference cited herein, can be used in combination with the features of any other embodiment. Stated another way, aspects of the above methods of rendering haptic effects may be used in any combination with other methods described herein or the methods can be used separately. All patents and publications discussed herein are incorporated by reference herein in their entirety.

## Claims

1. A system for determining haptic feedback in response to a tilt-based input, comprising:
a haptic actuator;
at least one tilt-based input device configured to receive a tilt-based input and output a tilt-input signal; and
at least one processor configured to execute computer instructions to,
receive the tilt-input signal from the at least one tilt-based input device, determine a characteristic of a haptic effect based on the tilt-input signal, generate a haptic output command configured to cause the haptic effect, and provide the haptic output command to the haptic actuator whereby the haptic
actuator is actuated to cause the haptic effect as haptic feedback in response to the tilt-based input.

2. The system of claim 1, wherein the at least one tilt-based input device comprises the haptic actuator.

3. The system of claim 1, further comprising a haptic enabled device including the haptic actuator.

4. The system of claim 1, wherein the tilt-based input is indicative of a degree of tilt around at least one tilt axis including a pitch axis, a roll axis, and a yaw axis.

5. The system of claim 1, wherein
the at least one tilt-based input device includes a first tilt-based input device having a first reference point and a second tilt-based input device having a second reference point, and
the tilt-input signal is determined according to a relative positioning between the first reference point and the second reference point.

6. The system of claim 1, wherein the characteristic of the haptic effect includes at least one of a magnitude characteristic, a location characteristic, and a direction characteristic.

7. The system of claim 1, wherein the at least one processor is further configured to execute computer instructions to determine the characteristic to provide feedback information associated with the tilt-based input;
or
wherein the at least one processor is further configured to execute computer instructions to determine the characteristic to provide contextual information associated with system application content;
or
wherein the at least one processor is further configured to execute computer instructions to determine the characteristic to provide contextual information associated with system application content and wherein the at least one processor is further configured to execute computer instructions to provide the contextual information associated with at least one of virtual reality content, augmented reality content, and mixed reality content.

8. The system of claim 1,
further comprising additional haptic actuators,
wherein the additional haptic actuators and the haptic actuator form a plurality of haptic actuators, and the at least one processor is further configured to select the haptic actuator from among the plurality of haptic actuators to be actuated according to the characteristic of the haptic effect.

9. A method for determining haptic feedback in response to a tilt-based input, the method to be carried out by at least one processor executing computer instructions, the method comprising:
receiving, by the at least one processor, a tilt-input signal from at least one tilt-based input device;
determining, by the at least one processor, a characteristic of a haptic effect based on the tilt-based input;
generating, by the at least one processor, a haptic output command configured to cause the haptic effect; and
providing, by the at least one processor, the haptic output command to a haptic actuator whereby the haptic actuator is actuated to cause the haptic effect as haptic feedback in response to the tilt-based input.

10. The method of claim 9, wherein the at least one tilt-based input device comprises the haptic actuator.

11. The method of claim 9, wherein the tilt-based input is indicative of a degree of tilt around at least one tilt axis including a pitch axis, a roll axis, and a yaw axis.

12. The method of claim 9, wherein:
the tilt input signal is received from a first tilt-based input device having a first reference point and a second tilt-based input device having a second reference point, and
the tilt-input signal is determined according to a relative positioning between the first reference point and the second reference point.

13. The method of claim 9, wherein the characteristic of the haptic effect includes at least one of a magnitude characteristic, a location characteristic, and a direction characteristic.

14. The method of claim 9, wherein the characteristic is determined to provide feedback information associated with the tilt-based input;
or
wherein the characteristic is determined to provide content information associated with content provided to a user;
or
wherein the characteristic is determined to provide content information associated with content provided to a user and wherein the characteristic is determined to provide content information associated with at least one of virtual reality content, augmented reality content, and mixed reality content.

15. The method of claim 9, further comprising selecting, by the at least one processor, the haptic actuator from among a plurality of haptic actuators to be actuated according to the characteristic of the haptic effect, wherein the plurality of haptic actuators includes the haptic actuator and additional haptic actuators.
